(19)

Europäisches Patentamt
European Patent Office
Office européen des brevets

(11) **EP 2 368 949 A1**

(12) **EUROPEAN PATENT APPLICATION**
published in accordance with Art. 153(4) EPC

(43) Date of publication:
**28.09.2011 Bulletin 2011/39**

(21) Application number: **09834796.6**

(22) Date of filing: **18.12.2009**

(51) Int Cl.:
**C09D 167/00** (2006.01)   **C09D 5/16** (2006.01)
**C09D 7/12** (2006.01)   **C09D 193/04** (2006.01)

(86) International application number:
**PCT/JP2009/071146**

(87) International publication number:
**WO 2010/073995 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.12.2008 JP 2008328306**

(71) Applicants:
• **National Maritime Research Institute**
  **Mitaka-shi, Tokyo 181-0004 (JP)**
• **Chugoku Marine Paints, Ltd.**
  **Hiroshima 739-0652 (JP)**
• **Hitachi Chemical Company, Ltd.**
  **Tokyo 163-0449 (JP)**

(72) Inventors:
• **MATSUOKA Kazuyoshi**
  **Mitaka-shi**
  **Tokyo 181-0004 (JP)**
• **MURAKAMI Chikahisa**
  **Mitaka-shi**
  **Tokyo 181-0004 (JP)**

• **YAMANE Kenji**
  **Mitaka-shi**
  **Tokyo 181-0004 (JP)**
• **NIIMOTO Jyunji**
  **Otake-shi**
  **Hiroshima 739-0652 (JP)**
• **KATSURAHARA Tooru**
  **Kamisu-shi**
  **Ibaraki 314-0255 (JP)**
• **KAWAGUCHI Kenichi**
  **Kamisu-shi**
  **Ibaraki 314-0255 (JP)**
• **KOJIMA Yasushi**
  **Tsukuba-shi**
  **Ibaraki 300-4247 (JP)**

(74) Representative: **HOFFMANN EITLE**
**Patent- und Rechtsanwälte**
**Arabellastraße 4**
**81925 München (DE)**

(54) **ANTIFOULING COATING COMPOSITION, ANTIFOULING COATING FILM, AND METHOD OF PREVENTING FOULING OF BASE**

(57)   The two-pack hydrolyzable antifouling coating composition of the invention has a first component that contains a polyester resin having a solid portion acid value of 50-200, a solid portion hydroxyl value of no greater than 100 and a 25°C viscosity of no greater than 500 mPa·s, and a second component which is a paste comprising zinc oxide and cuprous oxide, wherein the volatile organic compound content is no greater than 400 g/L based on the total of the first component and second component. The antifouling coating film or the invention is obtained by curing a two-pack hydrolyzable antifouling coating composition of the invention. The method of preventing fouling of a base material of the invention has the steps of coating or impregnating a two-pack hydrolyzable antifouling coating composition of the invention onto or into a base material, and curing the two-pack hydrolyzable antifouling coating composition to form an antifouling coating film.

Fig.1

EP 2 368 949 A1

## Description

## Technical Field

The present invention relates to a two-pack hydrolyzable antifouling coating composition that has a low environmental burden and minimal effect on the human health, and that can impart an excellent antifouling property to the base surfaces of ships, underwater structures, fishing nets, fishing gear and the like, as well as to an antifouling coating film employing the antifouling coating composition, and to a method of preventing fouling of bases.

## Background Art

The surfaces of base materials that are subjected to underwater conditions for long periods, in ships, underwater structures, fishing nets and the like, are prone to attachment of various types of aquatic creatures including animal life such as oysters, mussels and barnacles or plant life such as layer, as well as bacteria. Proliferation of these aquatic creatures on base surfaces can lead to increased ship surface roughness, and thus lower speed and greater fuel consumption, while also potentially resulting in damage as anticorrosive coating films provided on base surfaces can become damaged, reducing the strength and function of underwater structures or notably shortening their life. In addition, aquatic creatures adhere to and proliferate on fishing nets such as aquaculture nets and fixed shore nets, often causing serious problems such as oxygen deficient mortality of fish catches due to mesh obstruction. Furthermore, adhesion of aquatic creatures to seawater plumbing pipes for thermal power and nuclear power plants, and their proliferation, can create hindrances to the plumbing circulation of cooling water. Much research and development has been devoted to antifouling coatings designed to be coated onto base surfaces to prevent adhesion of aquatic creatures.

Antifouling coating compositions employing hydrolyzable polyester resins as resins are known as conventional antifouling coatings. Because polyester resins are produced by esterification of acids and alcohols by dehydrating condensation, they are prone to hydrolysis, and not only exhibit excellent antifouling performance but are also readily taken up in the process of metabolism of microorganism, by hydrolysis.

For example, Patent document 1 discloses an antifouling coating wherein the hydrolyzable resin used is an aliphatic polyester comprising one or more from among glycerin, ethylene glycol and 1,4-butanediol copolymerized in a polyester comprising succinic acid and 1,2-propylene glycol, Patent document 2 discloses an antifouling coating comprising a hydrolyzable polyester resin obtained by reacting a polyhydric alcohol with an oxyacid such as lactic acid and a polyvalent carboxylic acid containing no hydroxy groups, Patent document 3 discloses a hydrolyzable polyester resin for an Antifouling coating that is composed mainly of an aliphatic polyester comprising a metal salt of a hydroxycarboxylic acid, and Patent document 4 discloses a polyester resin for an antifouling coating, having excellent coating suitability with a suitable hydrolyzing rate, obtained by copolymerization of a C2-40 dicarboxylic acid such as glycolic acid, lactic acid or caprolactone, and a C2-40 glycol.

Also, Patent document 5 discloses an Antifouling coating composition comprising a resin with an acid value of 20-400, a metal-containing antifouling agent and a monobasic acid compound with a carboxyl group, Patent document 6 discloses an antifouling coating composition comprising a hydrolyzable polyester with a carboxyl group at both ends, Patent document 7 discloses an antifouling coating composition comprising a resin obtained by reacting an acrylic resin with a divalent or greater metal oxide, a polyester resin with an acid value of 50-200 and an antifouling agent, Patent document 8 discloses an Antifouling anti-algae polyester-based resin composition obtained by adding an antifouling agent to a polybutylene terephthalate copolymer comprising polytetramethylene glycol and isophthalic acid as copolymerizing components, Patent document 9 discloses an antifouling coating comprising a biocide and a binder polymer as a hydrolyzable polymer with an acid functional polymer, and Patent document 10 discloses an antifouling coating comprising a hydrolyzable self-polishing resin (an acrylic resin or polyester resin), cuprous oxide and copper pyrithione.

## Citation List

## Patent Literature

[Patent document 1] Japanese Unexamined Patent Application Publication HEI No. 7-166106
[Patent document 2] Japanese Unexamined Patent Application Publication HEI No. 7-082513
[Patent document 3] Japanese Unexamined Patent Application Publication HEI No. 8-176501
[Patent document 4] Japanese Unexamined Patent Application Publication HEI No. 7-53899
[Patent document 5] Japanese Unexamined Patent Application Publication HEI No. 9-132736
[Patent document 6] Japanese Unexamined Patent Application Publication HEI No. 11-255869

# EP 2 368 949 A1

[Patent document 7] Japanese Unexamined Patent Application Publication No. 2000-248206
[Patent document 8] Japanese Unexamined Patent Application Publication SHO No. 57-128742
[Patent document 9] Japanese Unexamined Patent Application Publication HEI No. 2-196869
[Patent document 10] Japanese Unexamined Patent Application Publication HEI No.10-298455

## Summary of Invention

### Technical Problem

Incidentally, in light of environmental problems, serious attention in the field of antifouling coatings has been focused in recent years on reducing volatile organic compound (VOC) contents of coating materials, in addition to providing prolonged antifouling performance (long-term antifouling properties) and reducing re-coating operations.

However, Patent documents 1-10 do not sufficiently address the issue of reducing VOCs. Based on research by the present inventors, it has been found that conventional Antifouling coatings employing polyester resins are in need of improvement in the following aspects.

Specifically, all of the conventional antifouling coatings have high molecular weights and require the use of large amounts of solvent to produce a viscosity suitable for coating. Consequently, the coating materials that can be provided for practical use have high VOC contents and therefore low environmental friendliness. Using lower molecular polyesters for viscosity reduction can reduce the amount of organic solvents used in the coating materials, but this also excessively increases the hydrolyzing rate in seawater, and since the hydrolyzing rate cannot be adjusted, the long-term antifouling property is impaired. When polylactic acid, polyglycolic acid or the like is used as a polyester resin for an antifouling coating, the hydrolyzing rate is too high and it is therefore difficult to maintain an antifouling property for long periods.

In addition, Patent document 8 discloses an embodiment of an antifouling coating which contains a polyester resin, cuprous oxide and zinc oxide, but it cannot be considered a hydrolyzable coating material, and it does not allow the VOC value to be easily minimized. Furthermore, the resin used in Patent document 10 adopts a structure having organic acid residues at the side chain ends, and therefore does not form a metal crosslinked structure. It is therefore extremely difficult to lower the VOC value without impairing the coating manageability.

Thus, low VOC and long-term antifouling are in a trade-off relationship, and it has not yet been possible to realize an antifouling coating exhibiting both.

The present invention has been accomplished in light of the aforementioned problems of the prior art, and its object is to provide an antifouling coating composition that allows high levels to be achieved for both low VOC and long-term Antifouling, and that can form an antifouling coating film with excellent mechanical strength, as well as an antifouling coating film obtained using the antifouling coating composition, and a method of preventing fouling of base materials.

### Solution to Problem

In order to solve the problems described above, the invention provides a two-pack hydrolyzable antifouling coating composition (hereunder also referred to simply as "antifouling coating composition") comprising a first component that contains a polyester resin having a solid portion acid value of 50-200, a solid portion hydroxyl value of no greater than 100 and a 25°C viscosity of no greater than 500 mPa·s, and a second component which is a paste comprising zinc oxide and cuprous oxide, wherein the volatile organic compound (VOC) content is no greater than 400 g/L based on the total of the first component and second component. The term "two-pack antifouling coating" refers to an Antifouling coating of a type used by mixing two solutions immediately prior to coating.

The antifouling coating composition of the invention is a two-pack antifouling coating composition used by mixing the aforementioned first component and second component, the formulation being such that admixture of the first component and second component forms a hydrolyzable metal crosslinked compound by reaction between the polyester resin component and the zinc oxide. This can drastically reduce the VOC value without impairing the coating manageability, to obtain a hydrolyzable antifouling coating composition having a long-term coating film grinding and cleaning property by a stabilized hydrolysis mechanism.

According to one aspect of the invention it is possible to sufficiently lower the viscosity of the resin itself for reduced coating material viscosity, and to realize a coating material composition with high coating film flexibility, a VOC of no greater than 400 g/L and a practical level of coating manageability. Furthermore, the polyester resin in the first component is a polyester resin with a high acid value, and by including it as an essential component it is possible to adequately increase the reactivity, and to improve the properties such as the coating film drying property, coated film strength, coating property and hydrolyzability (self polishing property and antifouling property). That is, the Antifouling coating composition of the invention allows the antifouling property to be maintained for prolonged periods, and by further controlling the acid value it is possible to control the drying property and hydrolyzability, which are dependent on metal crosslinking.

The weight-average molecular weight of the polyester resin in the antifouling coating composition of the invention is preferably no greater than 5,000 as measured by gel permeation chromatography.

The zinc oxide content in the second component is preferably 10-300 parts by weight with respect to 100 parts by weight of the polyester resin.

The Antifouling coating composition of the invention preferably further comprises a rosin and/or a rosin derivative.

The antifouling coating composition of the invention preferably further comprises an antifouling agent (other than cuprous oxide).

The antifouling coating composition of the invention still further preferably comprises at least one type of plasticizer selected from among chlorinated paraffins, petroleum resins and ketone resins.

The antifouling coating composition of the invention still yet further preferably comprises an extender pigment (other than zinc oxide).

The antifouling coating composition of the invention also preferably comprises a pigment dispersant.

The Antifouling coating composition of the invention also preferably comprises a color pigment.

The invention further provides an antifouling coating film obtained by curing a two-pack hydrolyzable Antifouling coating composition of the invention as described above.

The invention still further provides a method of preventing fouling of a base material, wherein a two-pack hydrolyzable antifouling coating composition of the invention as described above is coated onto or impregnated into a base material and then cured to form an antifouling coating film.

**Advantageous Effects of Invention**

According to the invention, it is possible to provide a low-VOC high solid-type hydrolyzable antifouling coating composition with satisfactory balance between the various aspects of performance, that can form antifouling coating films with excellent mechanical strength and having minimal environmental load and minimal effects on the human health and a low VOC while also exhibiting satisfactory coating manageability and an excellent drying property and long-term antifouling properties (polishing degree and stationary antifouling property).

According to the invention it is also possible to provide an antifouling coating film with an excellent long-term Antifouling property and excellent mechanical strength.

Furthermore, according to the invention it is possible to provide a method of preventing fouling of base materials, which can prevent fouling of base material surfaces of underwater structures, ship outer platings, fishing nets, fishing gear base materials and the like, for prolonged periods.

**Brief Description of Drawings**

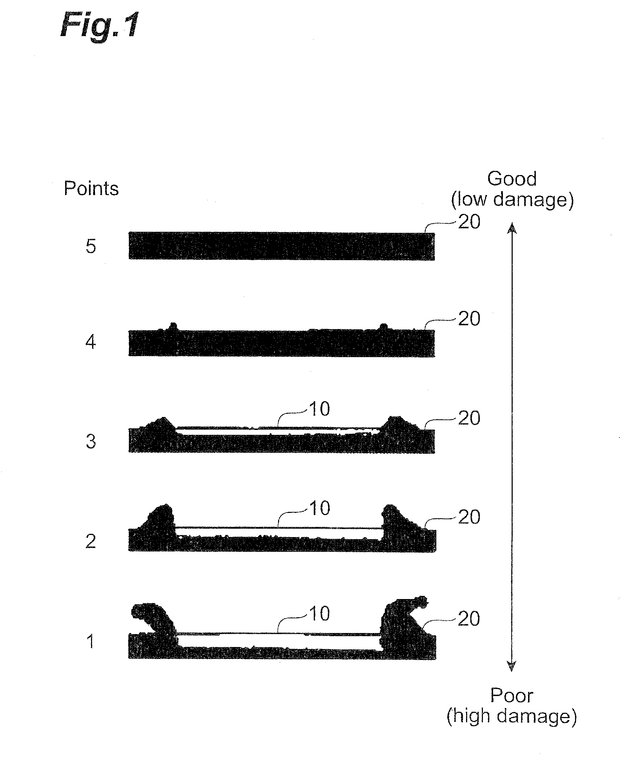

Fig. 1 is a diagram showing the evaluation levels in a coating film drying property test (wood block pressing test) for the examples.

**Description of Embodiments**

Preferred embodiments of the invention will now be described in detail.

[Antifouling coating composition]

The two-pack hydrolyzable antifouling coating composition of this embodiment comprises a first component that contains a polyester resin having a solid portion acid value of 50-200, a solid portion hydroxyl value of no greater than 100 and a 25°C viscosity of no greater than 500 mPa·s (hereunder also referred to as "polyester resin (A)"), and a second component which is a paste comprising zinc oxide and cuprous oxide, wherein the volatile organic compound content is no greater than 400 g/L based on the total of the first component and second component. Each of the components will now be explained.

<Polyester resin (A)>

The acid component of polyester resin (A) may be a monocarboxylic acid such as benzoic acid or p-t-butylbenzoic acid, an aromatic dicarboxylic acid such as terephthalic acid, isophthalic acid, phthalic acid or naphthalenedicarboxylic acid, an aliphatic carboxylic acid such as adipic acid, sebacic acid, azelaic acid, succinic acid, hymic acid or 1,6-cyclohexanedicarboxylic acid, a trivalent or greater polybasic acid such as trimellitic acid or pyromellitic acid, or a lower alkyl ester (for example, a C1-C4 alkyl ester) or acid anhydride of the foregoing. A monocarboxylic acid and a dibasic acid such as an aromatic dicarboxylic acid or saturated aliphatic dicarboxylic acid may each be used alone, or two or more may be used in combination. Trivalent or greater polybasic acids may also be used alone, or in combinations of two or more.

Alcohol components for polyester resin (A) include ethylene glycol, propylene glycol, 1,2-propanediol, 1,3-propanediol, 1,3-butanediol, 1,4-butanediol, neopentyl glycol, 1,5-pentanediol, 1,6-hexanediol, 3-methylpentanediol, diethylene glycol, 1,4-cyclohexanedimethanol, 3-methyl-1,5-pentanediol, 2-methyl-1, 3-propanediol, 2,2-diethyl-1,3-propanediol, 2-butyl-2-ethyl-13-propanediol, hydrogenated bisphenol A, ethylene oxide addition products or propylene oxide addition products of bisphenol A and divalent or greater polyhydric alcohols such as trimethylolethane, trimethylolpropane, glycerin and pentaerythritol. These alcohol components may be used alone or in combinations of two or more. Also, hydroxy acids such as dimethylolpropionic acid may be used together with the aforementioned carboxylic acids and alcohols.

From the viewpoint of viscosity of the antifouling coating composition of this embodiment, and reactivity with zinc oxide, the content of structural units derived from the acid component in polyester resin (A) (100 wt%) is preferably 5-95 wt%, more preferably 10-90 wt% and most preferably 20-80 wt%, The content of structural units derived from the alcohol component is preferably 5-95 wt%, more preferably 10-90 wt% and most preferably 20-80 wt%.

As the method for producing polyester resin (A), first the acid component and alcohol component are combined, and esterification reaction or transesterification reaction is conducted by a known production process such as a melting process or a solvent process with toluene or xylene (reflux process) to prepare a saturated polyester resin. For preparation of a polyester resin, polycondensation reaction may be conducted at 200-300°C under reduced pressure without a catalyst, or if necessary under reduced pressure in the presence of a catalyst such as antimony trioxide, germanium oxide or N-butyl titanate, to obtain a polyester resin.

The 25°C viscosity of polyester resin (A) is no greater than 500 mPa·s, preferably 100-500 mPa·s and more preferably 200-400 mPa·s. If the viscosity exceeds 500 mPa·s) it will be difficult to prepare an antifouling coating composition that is coatable while having a volatile organic compound (VOC) content of 400 g/L or lower.

The weight-average molecular weight of polyester resin (A) is no greater than 5,000, preferably no greater than 4,000 and more preferably no greater than 3,000. If the weight-average molecular weight exceeds 5000, the resin viscosity will be high and the final coating material viscosity excessively increased, tending to increase the VOC content as dilution with solvent will be necessary to obtain a coatable viscosity. If it is less than 500 the low-molecular-weight will lead to residual sticking after drying of the coating film, and therefore the weight-average molecular weight is preferably 500 or greater.

The weight-average molecular weight of polyester resin (A) is the value obtained by measurement by gel permeation chromatography (GPC) and calculation using a standard polystyrene calibration curve. The GPC conditions for molecular weight measurement are as follows.

<GPC conditions>

Pump: L-6200 by Hitachi, Ltd.
Column: Gel packs GL-420, GL-430 and GL-440 by Hitachi Chemical Co., Ltd.

Eluent: tetrahydrofuran

The solid portion acid value of polyester resin (A) is 50-200, preferably 80-150 and more preferably 90-110. If the solid portion acid value is less than 50, reaction with zinc oxide will be retarded and the drying property will be inferior, while if it exceeds 200, reaction with zinc oxide will cause the coating material to have high viscosity during mixing and tending to result in day-by-day viscosity increase. The solid portion acid value of the polyester resin of this embodiment may be measured by titration using potassium hydroxide (KOH).

The solid portion hydroxyl value of polyester resin (A) is no greater than 100, preferably no greater than 50, more preferably no greater than 20 and most preferably no greater than 10. If the solid portion hydroxyl value exceeds 100, the compatibility between the rosin and petroleum resin used for the coating material will be reduced and the outer appearance of the coating film impaired, while the water resistance of the coating film will also be inferior.

To obtain a solid portion acid value for polyester resin (A) within the range specified above, there may be applied a method of introducing an acid at the ends using a dibasic acid, or a method of modification with a polybasic acid. More specifically, a dibasic acid and a divalent alcohol may be used to obtain a polyester with acid ends, or synthesis of the main chain polyester may be followed by introduction of a polybasic acid (such as trimellitic anhydride). A method of introducing a polybasic acid at the start of synthesis may also be employed, but introduction by addition after polyester synthesis allows easier control of the reaction with less gelling and viscosity increase. Also, a polybasic acid such as trimellitic anhydride may be introduced alone, but the viscosity will tend to increase due to greater localization of carboxyl groups and higher polarity. Polybasic acids and, monocarboxylic or dicarboxylic acids and the like are more preferably used in combination.

In order to limit the solid portion hydroxyl value of polyester resin (A) to no greater than 100, the content may be prescribed at the start of synthesis, or it may be modified by reaction of a monocarboxylic acid with the hydroxyl groups at the final stage.

Low molecularization of the polyester for viscosity reduction will tend to increase the hydroxyl groups, and in such cases a monocarboxylic acid such as benzoic acid may be simultaneously used for reaction with the hydroxyl groups, to adjust the hydroxyl value.

Examples of organic solvents for dilution include solvents such as aromatic hydrocarbons, aliphatic hydrocarbons, esters, ketones and the like, as well as alcohols. Specific examples include aromatic hydrocarbons such as toluene and xylene, aliphatic hydrocarbons such as hexane, esters such as ethyl acetate and butyl acetate, ketones such as methyl ethyl ketone and methyl isobutyl ketone, and alcohols such as methanol, butanol and isobutanol. These organic solvents may be used alone or in combinations of two or more. Because of the high acid value of the polyester resin it is preferred to use a polar solvent such as an ester, ketone or alcohol instead of an aromatic solvent, in order to lower the VOC content by lower viscosity, but the viscosity of the resin is sometimes lowered by alcoholysis, due to the alcohol. Ester and ketone-based solvents are preferred.

<Second component>

The second component of this embodiment is a paste comprising zinc oxide and cuprous oxide as essential components (hereunder also referred to as "paste (B)").

The zinc oxide in paste (B) is an active pigment, and the zinc oxide functions as a curing agent by reaction with the carboxyl groups of polyester resin (A).

Reaction between polyester resin (A) and zinc oxide can form a metal salt crosslinked structure (for example, -COO··$Zn^{2+}$··OOC-) derived from a -COO group as the residue obtained by removal of hydrogen ion from a carboxyl group of polyester resin (A), and $Zn^{2+}$ as the metal ion of zinc oxide. The metal salt crosslinked structure is readily hydrolyzed, allowing stable hydrolysis to be exhibited. This allows the grinding and cleaning properties of the coating film to be exhibited for prolonged periods, so that a coating film with excellent long-term antifouling performance and excellent flexibility can be obtained, while preparing a two-pack reaction can provide practical coating material viscosity even if the VOC value is set to 400 g/L.

The reaction between the zinc oxide and the carboxyl groups of polyester resin (A) can often be confirmed by, for example, alteration of the color tone of the solution after mixing of paste (B) with the polyester resin (A) solution. It can also sometimes be confirmed based on time-dependent viscosity increase of the mixture.

The zinc oxide in paste (B) may have any of various particle sizes. When zinc oxide fine particles such as active zinc oxide are used, the situation is preferable as reaction between the carboxyl groups of polyester resin (A) and the zinc oxide is accelerated, compared to using zinc oxide with a large particle size, while the coating film hardness is also increased in a shorter period of time and damage resistance of the coating film is exhibited early.

In the antifouling coating composition of this embodiment, the zinc oxide content is preferably 10-300 parts by weight and more preferably 50-200 parts by weight with respect to 100 parts by weight of polyester resin (A). If it is less than 10 parts by weight the coating properties including crack resistance will tend to be poor, while if it is greater than 300 parts by weight the curability and coated film strength will tend to be poor.

Paste (B) used for this embodiment comprises, as an essential component, cuprous oxide which serves as an antifouling agent. Cuprous oxide exhibits stable Antifouling performance, from the viewpoint of its antifouling property against a wide range of organisms, and it exhibits its antifouling property in antifouling coating films in a variety of sea regions.

In the antifouling coating composition of this embodiment, the cuprous oxide content is used at preferably 50-800 parts by weight and even more preferably 200-600 parts by weight with respect to 100 parts by weight of the polyester resin.

<(C) Rosin and rosin derivative>

The antifouling coating composition of this embodiment may further comprise a rosin and/or a rosin derivative. Rosins include gum rosin, wood rosin and tall oil rosin. Rosin derivatives include hydrogenated rosins, polymerized rosins, maleinized rosins, aldehyde-modified rosins, rosin metal salts and rosin amines. The rosin and/or its derivative used may be a single type or a mixture of two or more types. The rosin and/or rosin derivative may be added to either or both the first component and second component, or it may be added to a prepared mixture of the first component and second component, although it is preferably added to the second component.

The content of the rosin and/or rosin derivative is preferably 0.5-300 parts by weight, more preferably 0.5-200 parts by weight and most preferably 0.5-150 parts by weight, with respect to 100 parts by weight of the polyester resin (A) solution. At less than 0.5 part by weight the coating material viscosity will tend to increase, and at greater than 300 parts by weight impairment of the physical properties, such as cracking, will tend to occur.

<(D) Antifouling agents>

The antifouling coating composition of this embodiment may further comprise an antifouling agent (other than cuprous oxide, hereunder also referred to as "antifouling agent (D)"). Antifouling agent (D) may be an organic or inorganic antifouling agent, which include metal pyrithiones such as copper pyrithione or zinc pyrithione, and 4,5-dichloro-2-n-octyl-4-isothiazolin-3-one, 2-methylthio-4-t-butylamino-6-cyclopropylamino-s-triazine and the like. For an antifouling property under stationary conditions, antifouling agent (D) is preferably copper pyrithione, 4,5-dichloro-2-n-octyl-4-isothiazolin-3-one or 2-methylthio-4-t-butylamino-6-cyclopropylamino-s-triazine. Antifouling agent (D) is preferably added to the second component.

In the Antifouling coating composition of this embodiment, antifouling agent (D) is preferably used in an amount of 10-600 parts by weight and more preferably 100-500 parts by weight, with respect to 100 parts by weight of the polyester resin (A) solution.

<(E) Other additives>

The antifouling coating composition of this embodiment may comprise at least one additive selected from the group consisting of plasticizers (e1), extender pigments (e2), pigment dispersants (e3), color pigments (e4), anti-running agents (e5) and anti-settling agents (e6) (hereunder referred to collectively as "additive (E)"). The additive (E) may be added to either or both the first component and second component, or it may be added to a prepared mixture of the first component and second component, although it is preferably added to the second component.

The plasticizers (e1), extender pigments (e2) (other than zinc oxide), pigment dispersants (e3), color pigments (e4), anti-running agents (e5) and anti-settling agents (e6) will now be explained in detail.

(e1) Plasticizers

Plasticizers (e1) include chlorinated paraffins, petroleum resins, ketone resins, TCP (tricresyl phosphate), polyvinyl ethyl ethers and dialkyl phthalates. The antifouling coating composition of this embodiment preferably includes a plasticizer (e1) from the viewpoint of increasing the crack resistance of the coating film (antifouling coating film) formed from the antifouling coating composition.
As chlorinated paraffins there may be used straight-chain or branched ones that are either liquid or solid (powder) at room temperature, but the average number of carbons is usually preferred to be 8-30 and more preferably 10-26, and preferably the number-average molecular weight is generally 200-1200 and more preferably 300-1100, the viscosity is generally at least 1 (poise/25°C) and preferably 1.2 or greater (poise/25°C), and the specific gravity is generally 1.05-1.80/25°C and more preferably 1.10-1.70/25°C. Using a chlorinated paraffin with this specified number of carbon atoms will allow a coating film with low cracking and peeling to be obtained from the resulting Antifouling coating composition. If the chlorinated paraffin has less than 8 carbon atoms the effect of inhibiting cracking may be insufficient, while if it has more than 30 carbon atoms the polishing degree (regenerability) of the obtained coating film surface may be poor and the antifouling property inferior. The degree of chlorination (chlorine content) of the chlorinated paraffin is usually preferred to be 35-75% and more preferably 35-65%. Using a chlorinated paraffin with this specified degree of chlorination will allow a coating film with low cracking and peeling to be obtained from the resulting antifouling coating composition. Such chlorinated paraffins include TOYOPARAX 150 and TOYOPARAX A-70, by Tosoh Corp. As petroleum resins there may be used, specifically, C5-based, C9-based, styrene-based and dicyclopentadiene-based compounds, as well as their hydrogenated forms, with commercial products including QUINTONE 1500 and QUINTONE 1700 by Zeon Corp. Preferred among these are chlorinated paraffins, petroleum resins and ketone resins. These plasticizers may be used either alone or in combinations of two or more.

The plasticizers (e1) are preferably added at 0.1-300 parts by weight, more preferably 0.1-200 parts by weight and most preferably 0.1-150 parts by weight, with respect to 100 parts by weight of the polyester resin (A) solution.

(e2) Extender pigments

Extender pigments (e2) (other than zinc oxide) include talc, silica, mica, clay, potassium feldspar, or calcium carbonate, kaolin and alumina white that are also used as anti-settling agents and white carbon, aluminum hydroxide, magnesium carbonate, barium carbonate and barium sulfate that are also used as delustering agents, among which extender pigments selected from the group consisting of talc, silica, mica, clay, calcium carbonate, kaolin, barium sulfate and potassium feldspar are preferred. Extender pigments are pigments with a low refractive index that when kneaded with oils or varnishes are transparent and do not hide coated surfaces, and an extender pigment (e2) is preferably added to the antifouling coating composition of this embodiment from the viewpoint of improving the coating properties, including crack resistance.

An extender pigment (e2) is preferably added in an amount of 0.1-500 parts by weight and more preferably 50-300 parts by weight, with respect to 100 parts by weight of the polyester resin (A) solution.

(e3) Pigment dispersants

As pigment dispersants (e3) there may be used conventionally known organic and inorganic dispersing agents. Organic pigment dispersants include aliphatic amines and organic acids (DUOMEEN TDO by Lion Corp., and DISPERBYK-101 by BYK Chemie).

A pigment dispersant (e3) is preferably added in an amount of 0.01-100 parts by weight and more preferably 0.01-50 parts by weight, with respect to 100 parts by weight of the polyester resin (A) solution.

(e4) Color pigments

As color pigments (e4) there may be used conventionally known organic and inorganic pigments. Organic pigments include carbon black, naphthol red, phthalocyanine blue and the like. Examples of inorganic pigments include red iron oxide, baryta powder, titanium white and yellow iron oxide. Various coloring agents such as dyes may also be added. The antifouling coating composition of this embodiment preferably contains a color pigment (e4) from the viewpoint of discretionary adjustment of the color tone of the antifouling coating film obtained from the composition.

A color pigment (e4) is preferably added in an amount of 0.01-100 parts by weight and more preferably 0,01-10 parts by weight, with respect to 100 parts by weight of the polyester resin (A) solution.

(e5) Anti-running agents (also known as "anti-sagging agents")

Anti-running agents (e5) include amide waxes, hydrogenated castor oil waxes and polyamide waxes and mixtures of both, and synthetic fine silica powder, with polyamide waxes and synthetic fine silica powder being preferred. Commercial products include DISPARLON A630-20XC by Kusumoto Chemicals, Ltd., and ASAT-250F by Itoh Oil Chemicals Co., Ltd. The antifouling coating composition of this embodiment preferably contains an anti-running agent (e5) from the viewpoint of allowing adjustment of the anti-running property during coating.

An anti-running agent (e5) is preferably added in an amount of 0.1-100 parts by weight and more preferably 0.1-50 parts by weight, with respect to 100 parts by weight of the Polyester resin (A) solution.

(e6) Anti-settling agents

Anti-settling agents (e6) include organic clay-based Al, Ca and Zn amine salts, polyethylene waxes and polyethylene oxide-based waxes, with polyethylene oxide-based waxes being preferred. Commercial products include DISPARLON 4200-20X by Kusumoto Chemicals, Ltd. The antifouling coating composition of this embodiment preferably contains an anti-settling agent (e6) from the viewpoint of preventing deposition of the solvent insolubles during the storage period and improving the stirrability.

An anti-settling agent (e6) is preferably added in an amount of 0.1-100 parts by weight and more preferably 0.1-50 parts by weight, with respect to 100 parts by weight of the polyester resin (A) solution.

<(F) Solvent>

The antifouling coating composition of this embodiment may further comprise a solvent (F). Publicly known solvents with a wide range of boiling points may be used as the solvent (F), and specifically there may be mentioned aliphatic solvents such as terpenes; aromatic solvents such as toluene and xylene; alcohol-based solvents such as isopropyl alcohol, n-butyl alcohol and isobutyl alcohol; esteric solvents such as ethyl acetate and butyl acetate; ketone-based solvents such as methyl ethyl ketone, methyl isobutyl ketone and methyl amyl ketone; and ether-based or ether ester-based solvents such as ethyleneglycol monomethyl ether, ethyleneglycol monobutyl ether, propyleneglycol monomethyl ether and propyleneglycol monomethyl ether acetate, with xylene, methyl isobutyl ketone and propyleneglycol monomethyl ether being preferred. These solvents may be used as single compounds or as combinations of two or more compounds.

The Antifouling coating composition of this embodiment comprises the first component and second component described above, and the volatile organic compound (VOC) content is no greater than 400 g/L and preferably 100-350 g/L. A VOC content of no greater than 400 g/L can minimize environmental load and effects on the human health. The VOC is the value determined under the measuring conditions explained in the Examples section.

The antifouling coating composition of this embodiment can be produced by stirring and mixing the first component and second component that have been previously prepared. The stirring and mixing may be accomplished using a known mixer/stirrer such as a high-speed Disper mixer, sand grinding mill, basket mill, ball mill, triple roll, Ross mixer, planetary mixer, universal Shinagawa mixer or the like.

[Antifouling coating film and method of preventing fouling of base materials]

The antifouling coating film of this embodiment is obtained by curling the antifouling coating composition of the embodiment described above. In the method of preventing fouling of base materials according to this embodiment, the antifouling coating composition of the aforementioned embodiment is coated onto or impregnated into a base material and then cured to form an antifouling coating film.

There are no particular restrictions on the base material that is the target of the method of preventing fouling, but it is preferably an underwater structure, ship, fishing net or fishing gear item. For example, the antifouling coating composition may be applied once or several times by a common method onto the surface of underwater structures such as plumbing drains in thermal power or nuclear power plants, sludge diffusion-blocking films for various ocean civil engineering works such as coastal roads, undersea tunnels, harbor facilities, canals/water channels or the like, or molded articles of ships, fishery materials (for example, ropes, fishing nets, fishing gears, floats and buoys) and the like, to obtain antifouling coating film-coated ships or underwater structures with excellent antifouling properties, allowing sustained release of antifouling agent components for prolonged periods, and exhibiting excellent crack resistance with suitable flexibility even when thickly coated.

That is, an antifouling coating film obtained by coating and curing the Antifouling coating composition of this embodiment on the surface of a molded article exhibits excellent antifouling properties that allow long-term and continuous prevention of adhesion of aquatic creatures such as sea lettuce barnacles, green laver, serpula, oysters and *Bugula neritina.* Satisfactory adhesion occurs especially for material surfaces when the materials of ships and the like are FRP, steel, wood or aluminum allow. In addition, coating the antifouling coating composition of this embodiment onto the surface of an underwater structure can prevent adhesion of marine organisms and maintain the function of the structure for prolonged periods, while coating onto a fishing net can prevent obstruction of the fishing net mesh and lower the risk of environmental pollution.

The antifouling coating composition of this embodiment may be coated directly onto a fishing net, or it may be coated onto the surface of a ship or underwater structure whose base layer material has already been coated with a rust-preventive agent or primer. Furthermore, the Antifouling coating composition of this embodiment may be applied as an overcoat for repair on the surface of a ship, especially a FRP ship, or an underwater structure that has already been coated with a conventional antifouling coating or that has already been coated with an antifouling coating composition according to this embodiment. There are no particular restrictions on the thickness of the antifouling coating film formed in this manner on the surface of a ship, underwater structure or the like, and it may be about 30-250 μm/application, for examples.

The antifouling coating film of this embodiment, obtained as described above, is the cured product of the Antifouling coating composition of this embodiment, and therefore the risk of environmental pollution is low and it exhibits an excellent long-term antifouling property against adhesion of a broad range of organisms onto ships and underwater structures.

As explained above, this embodiment can provide a two-pack, low-VOC hydrolyzable antifouling coating composition capable of forming an antifouling coating film having low environmental load and excellent antifouling properties, superior uniform polishing degree of the coated film, whereby the coating film undergoes uniform wear at a constant rate over long periods, and excellent maintenance of long-therm antifouling performance of the coated film, allowing superior antifouling performance to be maintained for prolonged periods and making it suitable for sea going vessels, as well as an antifouling coating film, and ships, underwater structure, fishing gear or wishing nets coated with the antifouling coating film.

Examples

The present invention will now be explained in greater detail based on examples and comparative examples, with the understanding that these examples are in no way limitative on the invention, The "parts" and "%" values in the examples and comparative examples refer to "parts by weight" and "wt%", respectively.

<Production of polyester resin (A)>

(Production Example 1: Production of polyester resin solution (a-1))

In a 2 L four-necked flask there were added 371.0 parts of isophthalic acid, 427.1 parts of sebacic acid, 238.2 parts of neopentyl glycol and 89.0 parts of ethylene glycol, and reaction (esterification reaction) was conducted at 220°C for 5 hours in the presence of nitrogen gas. The water generated during the reaction was removed by reflux dewatering and, measuring the acid value by KOH titration and the hydroxyl value by the acetylation method, the reaction was suspended when the solid portion acid value reached 100 and the solid portion hydroxyl value reached 30. After cooling the reaction mixture, it was diluted with methyl isobutyl ketone to obtain polyester resin solution (a-1) having a nonvolatile content of 70.3%, an acid value of 70 (100 in terms of solid portion), a hydroxyl value of 21 (30 in terms of solid portion), a viscosity of 320 mPa·s and a weight-average molecular weight of 1,800.

(Production Example 2: Production of polyester resin solution (a-2))

Polyester resin solution (a-2) was obtained in the same manner as Example 1, except for changing the amounts of starting materials to those shown in Table 1.

(Production Example 3: Production of polyester resin solution (a-3))

In a 2 L four-necked flask there were added 225.0 parts of isophthalic acid, 366.0 parts of sebacic acid, 205.0 parts of neopentyl glycol, 131.0 parts of ethylene glycol and 86.0 parts of benzoic acid, and reaction (esterification reaction) was conducted at 220°C for 6 hours in the presence of nitrogen gas. The water generated during the reaction was removed by reflux dewatering and, measuring the acid value by KOH titration and the hydroxyl value by the acetylation method, the reaction was suspended when the solid portion acid value reached 43 and the solid portion hydroxy value reached 115. The mixture was then cooled to 170°C, 108.0 parts by weight of trimellitic anhydride was added, the mixture was warmed for 2 hours, addition reaction was conducted, and the reaction was suspended when the solid portion acid value reached 90 and the solid portion hydroxyl value reached 60. After cooling, dilution was performed with methyl isobutyl ketone to obtain polyester resin solution (a-3) having a heating residue of 70.0%, an acid value of 63 (90 in terms of solid portion), a hydroxyl value of 42 (60 in terms of solid portion), a viscosity of 345 mPa·s and a weight-average molecular weight of 2,060.

(Production Examples 4 to 7: Production of polyester resin solutions (a-4)-(a-7))

Polyester resin solutions (a-4) to (a-7) were obtained in the same manner as Production Example 3, except for changing the types and amounts of starting materials to those shown in Table 2.

(Comparative Production Examples 1 to 4)

The amounts of starting materials used for production of resin solutions as comparative production examples are shown in Table 3.
For Comparative Production Examples 1 and 2, synthesis was carried out by the same steps as Production Example 3, and KOH titration confirmed a solid portion acid value of no greater than 2, after which trimellitic anhydride was reacted therewith to obtain resin solution (a-8) or (a-9).
For Comparative Production Example 3, synthesis was carried out by the same steps as Production Example 3, and KOH titration confirmed a solid portion acid value of 10, after which trimellitic anhydride was reacted therewith and the solid portion acid value was adjusted to 40 to obtain resin solution (a-10).
For Comparative Production Example 4, synthesis was carried out by the same steps as Production Example 3, and KOH titration confirmed a solid portion acid value of 140, after which trimellitic anhydride was reacted therewith and the solid portion acid value was adjusted to 210 to obtain resin solution (a-11).

<Evaluation of resin properties>

The following evaluation was conducted on polyester resin solutions (a-1) to (a-7) obtained in Production Examples 1 to 7 and resin solutions (a-8) to (a-11) obtained in Comparative Production Example 1. The results are shown in Tables 1 to 3.

(1) GPC

Measurement was conducted under the following conditions.

(GPC measuring conditions)

Apparatus: L-6200 by Hitachi, Ltd.
Column: Gel packs Gel-420, Gel-430 and GL-440 by Hitachi Chemical Co., Ltd.

Eluent: THF

Flow rate: 2.0 ml/min

(2) Heating residue (weight NV)

After weighing out 1 g of resin solution into a flat-bottom dish, a wire of known mass was used for even spreading and the solution was dried at 125°C for 1 hour, after which the weights of the residue and wire were measured and the heating residue (wt%) was calculated,
The term "heating residue" has the same definition as "nonvolatile content" mentioned above.

(3) Viscosity

The viscosity of the polyester resin solution was measured at 25°C using a B-type viscometer.

(4) Evaluation of compatibility

After mixing each of the polyester resin solutions obtained in the production examples with the combination resins listed in Tables 1 to 3 to a solid ratio of 1:1, it was coated onto a glass plate with a film applicator (clearance: 0.3 mm) and dried at 23°C, and the outer appearance was examined after 24 hours. In Tables 1 to 3, "A" represents compatibility and "B" represents no compatibility (separation).

[Table 1]

|  |  | Prod. Ex. 1 | Prod. Ex. 2 |
|---|---|---|---|
| Polyester resin (A) solution | | a-1 | a-2 |
| Monomer composition (parts) | Ethylene glycol | 89 | 75 |
|  | Neopentyl glycol | 238.2 | 235 |
|  | Trimethylolpropane | - | - |
|  | Sebacic acid | 427.1 | 452 |
|  | Phthalic acid | - | - |
|  | Isophthalic acid | 371 | 358.9 |
|  | Terephthalic acid | - | - |
|  | Benzoic acid | - | - |
|  | Trimellitic anhydride | - | - |
| Non-volatile content (%) | | 70.3 | 69.9 |
| Resin properties | Viscosity (mPa·s) | 320 | 360 |
|  | Solid portion acid value (mgKOH/g) | 100 | 110 |
|  | Solid portion hydroxyl value (mgKOH/g) | 30 | 10 |
|  | Number-average molecular weight (Mn) | 860 | 920 |
|  | Weight-average molecular weight (Mw) | 1800 | 2200 |

(continued)

|  |  | Prod. Ex. 1 | Prod. Ex. 2 |
|---|---|---|---|
| Polyester resin (A) solution | | a-1 | a-2 |
| Compatibility | Resin | A | A |
|  | Alicyclic hydrocarbon (QUINTONE 1500) | A | A |
|  | Ketone resin (LAROPALA81) | A | A |

[Table 2]

|  |  | Prod. Ex. 3 | Prod. Ex 4 | Prod. Ex. 5 | Prod. Ex.6 | Prod. Ex. 7 |
|---|---|---|---|---|---|---|
| Polyester resin (A) solution | | a-3 | a-4 | a-5 | a-6 | a-7 |
| Monomer composition (parts) | Ethylene glycol | 131 | 112 | 126 | 120 | 118 |
|  | Neopentyl glycol | 205 | 184 | 173 | 202 | 177 |
|  | Trimethylolpropane | - | 10 | - | - | - |
|  | Sebacic acid | 366 | 331 | 309.7 | 334 | 318 |
|  | Phthalic acid | - | - | - | 190 | - |
|  | Isophthalic acid | 225 | 218 | 204.7 | - | 148 |
|  | Terephthalic acid | - | - | - | - | 105 |
|  | Benzoic acid | 86 |  | 119.3 | 110 | 122 |
|  | Trimellitic anhydride | 108 | 127 | 180 | - | 130.9 |
| Non-volatile content (%) | | 70 | 69.7 | 69.8 | 70.3 | 72.2 |
| Resin properties | Viscosity (mPa·s) | 345 | 320 | 320 | 400 | 340 |
|  | Solid portion acid value (mgKOH/g) | 90 | 100 | 120 | 100 | 100 |
|  | Solid portion hydroxyl value (mgKOH/g) | 50 | 5 | 5 | 30 | 5 |
|  | Number-average molecular weight (Mn) | 1000 | 1000 | 900 | 900 | 920 |
|  | Weight-average molecular weight (Mw) | 2060 | 2090 | 1890 | 1960 | 1840 |
| Compatibility | Rosin | A | A | A | A | A |
|  | Alicyclic hydrocarbon - (QUINTONE 1500) | A | A | A | A | A |
|  | Ketone resin (LAROPALA81) | A | A | A | A | A |

[Table 3]

| | | Comp. Prod. Ex. 1 | Comp. Prod. Ex. 2 | Comp. Prod. Ex. 3 | Comp. Prod. Ex. 4 |
|---|---|---|---|---|---|
| Resin solution | | a-8 | a-9 | a-10 | a-11 |
| Monomer composition (parts) | Ethylene glycol | - | - | 33.7 | 120 |
| | Neopentyl glycol | 544 | 526 | 292.9 | 197.1 |
| | Trimethylolpropane | - | - | 91.5 | 10.7 |
| | Sebacic acid | - | - | 168.4 | 354.6 |
| | Phthalic acid | - | - | - | - |
| | Isophthalic acid | 390.2 | 291.3 | 379 | 233.5 |
| | Terephthalic acid | - | - | - | - |
| | Adipic acid | 93 | 81.3 | - | - |
| | Benzoic acid | - | - | 92.1 | - |
| | Trimellitic anhydride | 83 | 137.6 | 68.1 | 160.7 |
| Non-volatile content (%) | | 69.4 | 71.3 | 70 | 70 |
| Resin properties | Viscosity (mPa·s) | 1100 | 1200 | 210 | 2000 |
| | Solid portion acid value (mgKOH/g) | 50 | 100 | 40 | 210 |
| | Solid portion hydroxyl value (mgKOH/g) | 210 | 240 | 80 | 157 |
| | Number-average molecular weight (Mn) | 770 | 620 | 1080 | 360 |
| | Weight-average molecular weight (Mw) | 1340 | 1000 | 2000 | 500 |
| Compatibility | Rosin | B | B | B | B |
| | Alicyclic hydrocarbon (QUINTONE 1500) | B | B | B | B |
| | Ketone resin (LAROPAL A81) | B | B | B | B |

<Modification of antifouling coating composition>

(Example 1)

The second component of the antifouling coating composition was modified in the following manner.

First, a xylene solvent (8.5 parts), PGM (2.5 parts), methyl isobutyl ketone (1 part), DUOMEEN TDO (1.3 parts), rosin (7.5 parts) and chlorinated paraffin (2 parts) were mixed in a 1000 ml plastic container and agitated with a paint shaker to uniform dissolution.

Next, Talc FC-1 (3 parts), zinc oxide (11 parts), potassium feldspar (4.2 parts), NOVAPERM RED F5RK (0.3 part), cuprous oxide (43.4 parts), copper pyrithione (2.5 parts) and the anti-settling agent Dis4200-20X (1 part) were combined, 200 parts of glass beads were added, and the mixture was dispersed for 1 hour.

The anti-running agent Dis630-20X (1.8 parts) was further added, and after dispersion for 20 minutes, filtration was performed with an 80 mesh filter screen to prepare paste (1) as the second component.

As the first component there was used polyester resin solution (a-1) obtained in Production Example 1.

An antifouling coating composition was prepared by uniformly mixing 10 parts by weight of polyester resin solution (a-1) as the first component with the second component, using a Disper mixer.

(Examples 2 to 19)

Antifouling coating compositions were prepared in the same manner as Example 1, except for changing the compounding ingredients and amounts of the second component and the types and amounts of the first component as shown in Tables 4 to 6.

(Comparative Examples 1 to 7)

Antifouling coating compositions were prepared in the same manner as Example 1, except for changing the compounding ingredients and amounts of the second component and the types and amounts of the first component as shown in Table 7.

[Table 4]

| | | Example | | | | | | |
|---|---|---|---|---|---|---|---|---|
| | | 1 | 2 | 3 | 4 | 5 | 6 | 7 |
| First component (parts) | Polyester resin solution a-1 | to | - | - | - | - | - | - |
| | Polyester resin solution a-2 | - | 10 | - | - | - | - | - |
| | Polyester resin solution a-3 | - | - | 10 | - | - | - | - |
| | Polyester resin solution a-4 | - | - | - | 10 | - | - | - |
| | Polyester resin solution a-5 | - | - | - | - | 10 | - | - |
| | Polyester resin solution a-6 | - | - | - | - | - | 10 | - |
| | Polyester resin solution a-7 | - | - | - | - | - | - | 10 |
| | Polyester resin solution a-8 | - | - | - | - | - | - | - |
| | Polyester resin solution a-9 | - | - | - | - | - | - | - |
| | Polyester resin solution a-10 | - | - | - | - | - | - | - |
| | Polyester resin solution a-11 | - | - | - | - | - | - | - |
| | subtotal | 10 | 10 | 10 | 10 | 10 | 10 | 10 |
| Second component (parts) | Xylene | 8.5 | 8.5 | 8.5 | 8.5 | 8.5 | 8.5 | 8.5 |
| | PGM | 2.5 | 2.5 | 2.5 | 2.5 | 2.5 | 2.5 | 2.5 |
| | MIBK | 1 | 1 | 1 | 1 | 1 | 1 | 1 |
| | Rosin | 7.5 | 7.5 | 7.5 | 7.5 | 7.5 | 7.5 | 7.5 |
| | LAROPAL ABI | - | - | - | - | - | - | - |
| | QUINTONE 1500 | - | - | - | - | - | - | - |
| | CERECLOR S-52 | 2 | 2 | 2 | 2 | 2 | 2 | 2 |
| | DUOMEEN TDO | 1.3 | 1.3 | 1.3 | 13 | 1.3 | 1.3 | 1.3 |
| | BYK-101 | - | - | - | - | - | - | - |
| | Zinc oxide | 11 | 11 | 11 | 11 | 11 | 11 | 11 |
| | Tale FC-1 | 3 | 3 | 3 | 3 | 3 | 3 | 3 |
| | Potassium feldspar | 4.2 | 4.2 | 4.2 | 4.2 | 4.2 | 4.2 | 4.2 |
| | Copper pyrithione (Copper ornadine) | 2.5 | 2.5 | 2.5 | 2.5 | 2.5 | 2.5 | 2.5 |

(continued)

|  |  | Example | | | | | | |
|---|---|---|---|---|---|---|---|---|
|  |  | 1 | 2 | 3 | 4 | 5 | 6 | 7 |
|  | 4,5-Dichloro-2-n-octyl-4-isothiazolia-3-one | - | - | - | - | - | - | - |
|  | Cuprous oxide NC803 | 43.4 | 43.4 | 43.4 | 43.4 | 43.4 | 43.4 | 43.4 |
|  | Anti-settling agent Dis 4200-20X | 1 | 1 | 1 | 1 | 1 | 1 | 1 |
|  | Organic red pigment (NOVAPERM RED FSRK) | 0.3 | 0.3 | 0.3 | 0.3 | 0.3 | 0.3 | 0.3 |
|  | Anti-ranning agent Dis 630-20XC | 1.8 | 1.8 | 1.8 | 1.8 | 1.8 | 1.8 | 1.9 |
|  | Subtotal | 90 |  | 90 | 90 | 90 | 90 | 90 |
|  | Total | 100 | 100 | 100 | 100 | 100 | 100 | 100 |

[Table 5]

|  |  | Example | | | | | | |
|---|---|---|---|---|---|---|---|---|
|  |  | 8 | 9 | 10 | 11 | 12 | 13 | 14 |
| First component | Polyester resin solution a-1 | 10 | 10 | 10 | 10 | - | 10 | 10 |
|  | Polyester resin solution a-2 | - | - | - | - | 10 | - | - |
|  | Polyester resin solution a-3 | - | - | - | - | - | - | - |
|  | Polyester resin solution a-4 | - | - | - | - | - | - | - |
|  | Polyester resin solution a-5 | - | - | - | - | - | - | - |
|  | Polyester resin solution a-6 | - | - | - | - | - | - | - |
|  | Polyester resin solution a-7 | - | - | - | - | - | - | - |
|  | Polyester resin solution a-8 | - | - | - | - | -- | - | - |
|  | Polyester resin solution a-9 | - | - | - | - | - | - | - |
|  | Polyester resin solution a-10 | - | - | - | - | - | - | - |
|  | Polyester resin solution a-11 | - | - | - | - | - | - | - |
|  | Subtotal | 10 | 10 | 10 | 10 | 10 | 10 | 10 |
| Second component | Xylene | 8.5 | 8.5 | 8.5 | 5.3 | 5.3 | 6.5 | 8.5 |
|  | PGM | 2.5 | 2.5 | 2.5 | 1.5 | 1.5 | 2.5 | 2.5 |
|  | MIBK | 1 | 1 | 1 | 1 | 1 | 1 | 1 |
|  | Rosin | 7.5 | 7.5 | 7.5 | 7.5 | 7.5 | 7.5 | 7.2 |
|  | LAROPAL A81 | - | - | - | - | - | - | 0.3 |
|  | QUINTONE 1500 | - | - | - | - | - | - | - |
|  | CERECLOR S-52 | 2 | 2 | 2 | 2 | 2 | 2 | 2 |
|  | DUOMEEN TDO | 1.3 | 1.3 | 1.3 | 1.3 | 1.3 | 0.8 | 1.3 |
|  | BYK-101 | - | - | - | - | - | 0.5 | - |
|  | Zinc oxide | 15 | 18 | 7 | 10 | 10 | [1 | 11 |
|  | Talc FC-I | 3 | 3 | 3 | 3 | 3 | 3 | 3 |

(continued)

|  |  |  | Example |  |  |  |  |  |  |
|---|---|---|---|---|---|---|---|---|---|
|  |  |  | 8 | 9 | 10 | 11 | 12 | 13 | 14 |
|  |  | Potassium feldspar | 4.2 | 4.2 | 4.2 | 4.2 | 4.2 | 4.2 | 4.2 |
|  |  | Copper pyrithione (Copper ornadine) | 2.5 | 2.5 | 2.5 | 2.5 | - | 2.5 | 2.5 |
|  |  | 4,5-Dichloro-2-n-octyl-4-isothiazolin-3-one | - | - | - | - | - | 2 | - |
|  |  | 2-Methylthio-4-t-butylamino-6-cyclopropylamino-s-triazine | - | - | - | - | 3 | - | - |
|  |  | Cuprous oxide NC803 | 39.4 | 36.4 | 47.4 | 48.6 | 48.1 | 43.4 | 43.4 |
|  |  | Anti-sealing agent Dis 4200-20X | 1 | 1 | 1 | 1 | 1 | 1 | 1 |
|  |  | Organic red pigment (NOVAPERM RED F5RK) | 0.3 | 0.3 | 0.3 | 0.3 | 0.3 | 0.3 | 0.3 |
|  |  | Anti-running agent Dis 630-20XC | 1.8 | 1.8 | 1.8 | 1.8 | 1.8 | 1.8 | 1.8 |
|  |  | Subtotal | 90 | 90 | 90 | 90 | 90 | 90 | 90 |
|  |  | Total | 100 | 100 | 100 | 100 | 100 | 100 | 100 |

[Table 6]

|  |  |  | Example. |  |  |  |  |
|---|---|---|---|---|---|---|---|
|  |  |  | 15 | 16 | 17 | 18 | 19 |
| First component |  | Polyester resin solution a-1 | - | 10 | 10 | - | 10 |
|  |  | Polyester resin solution a-2 | - | - | - | - | - |
|  |  | Polyester resin solution a-3 | - | - | - | 10 | - |
|  |  | Polyester resin solution a-4 | - | - | - | - | - |
|  |  | Polyester resin solution a-5 | - | - | - | - | - |
|  |  | Polyester resin solution a-6 | 10 | - | - | - | - |
|  |  | Polyester resin solution a-7 | - | - | - | - | - |
|  |  | Polyester resin solution a-8 | - | - | - | - | - |
|  |  | Polyester resin solution a-9 | - | - | - | - | - |
|  |  | Polyester resin solution a-10 | - | - | - | - | - |
|  |  | Polyester resin solution a-11 | - | - | - | - | - |
|  |  | Subtotal | 10 | 10 | 10 | 10 | 10 |
|  |  | Xylene | 8.5 | 8.5 | 8.5 | 8.5 | 8.5 |
|  |  | PGM | 2.5 | 2.5 | 2.5 | 2.5 | 2.5 |
|  |  | MIBX | 1 | 1 | 1 | 1 | 1 |
|  |  | Rosin | 7.2 | 7.2 | 7 | 7 | 7.5 |
|  |  | LAROPAL A81 | 0.3 | - | 0.5 | - | - |
|  |  | QUINTONE 1500 | - | 0.3 | - | 0.5 | - |
|  |  | CERECLOR S-52 | 2 | 2 | 2 | 2 | 2 |
|  |  | DUOMEEN TDO | 1.3 | 1.3 | 1.3 | 1.3 | 1.3 |

(continued)

|  |  | Example. |  |  |  |  |
|---|---|---|---|---|---|---|
|  |  | 15 | 16 | 17 | 18 | 19 |
| Second component | BYK-101 | - | - | - | - | - |
|  | Zinc oxide | 11 | 11 | 11 | 11 | 11 |
|  | Talc FC-1 | 3 | 3 | 3 | 3 | 3 |
|  | Potassium feldspar | 4.2 | 4.2 | 4.2 | 4.2 | 4.2 |
|  | Copper pyrithione (Copper omadine) | - | 2.5 | 2.5 | 2.5 | - |
|  | 4,5-Dichloro-2-n-octyl-4-isothiazolin-3-one | - | - | - | - | - |
|  | 2-Methylthio-4-t-butylamino-6-cyclopropylamino-s-triazine | 2.5 | - | - | - | - |
|  | Cuprous oxide NC803 | 43.4 | 43.4 | 43.4 | 43.4 | 45.9 |
|  | Anti-settling agent Dis 4200-20X | 1 | 1 | 1 | 1 | 1 |
|  | Organic red pigment (NOVAPERM RED F5RK) | 0.3 | 0.3 | 0.3 | 0.3 | 0.3 |
|  | Anti-running agent Dis 630-20XC | 1.8 | 1.8 | 1.8 | 1.8 | 1.8 |
|  | Subtotal | 90 | 90 | 90 | 90 | 90 |
| Total |  | 100 | 100 | 100 | 100 | 100 |

[Table 7]

|  |  | Comparative Example |  |  |  |  |  |  |
|---|---|---|---|---|---|---|---|---|
|  |  | 1 | 2 | 3 | 4 | 5 | 6 | 7 |
| First component | Polyester resin solution a-1 | - | - | - | - | 10 | - | - |
|  | Polyester resin solution a-2 | - | - | - | - | - | - | - |
|  | Polyester resin solution a-3 | - | - | - | - | - | - | - |
|  | Polyester resin solution a-4 | - | - | - | - | - | - | - |
|  | Polyester resin solution a-5 | - | - | - | - | - | - | - |
|  | Polyester resin solution a-6 | - | - | - | - | - | - | - |
|  | Polyester resin solution a-7 | - | - | - | - | - | - | - |
|  | Polyester resin solution a-8 | 10 | - | - | - | - | - | 10 |
|  | Polyester resin solution a-9 | - | 10 | - | - | - | - | - |
|  | Polyester resin solution a-10 | - | - | 10 | - | - | - | - |
|  | Polyester resin solution a-11 | - | - | - | 10 | - | 10 | 10 |
|  | Subtotal | 10 | 10 | 10 | 10 | 10 | 10 | 10 |
|  | Xylene | 8.5 | 8.5 | 8.5 | 8.5 | 8.5 | 8.5 | 8.5 |
|  | PGM | 2.5 | 2.5 | 2.5 | 2.5 | 2.5 | 2.5 | 2.5 |
|  | MIBK | 1 | 1 | 7.5 | 1 | 1 | 1 | 1 |
|  | Rosin | 7.5 | 7.5 | - | 7.5 | 7.5 | 7.5 | 7.5 |
|  | LAROPAL A81 | - | - | - | - | - | - | - |
|  | QUINTONE 1500 | - | - | - | - | - | - | - |

(continued)

| | | Comparative Example | | | | | | |
|---|---|---|---|---|---|---|---|---|
| | | 1 | 2 | 3 | 4 | 5 | 6 | 7 |
| Second component | CERECLOR S-52 | 2 | 2 | 2 | 2 | 2 | 2 | 2 |
| | DUOMEEN TDO | 1.3 | 1.3 | 1.3 | 1.3 | 1.3 | 1.3 | 1.3 |
| | BYK-101 | - | - | - | - | - | - | - |
| | Zinc oxide | 11 | 11 | 11 | 11 | - | - | 11 |
| | Talc FC-1 | 3 | 3 | 3 | 3 | 5 | 5 | 3 |
| | Potassium feldspar | 4.2 | 4.2 | 4.2 | 4.2 | 7.2 | 7.2 | 4.2 |
| | Copper pyrithione (Copper omadine) | 2.5 | 2.5 | 2.5 | 2.5 | 2.5 | 2.5 | - |
| | 4,5-Dichloro-2-n-octyl-4-isothiazolin-3-one | - | - | - | - | - | - | - |
| | Cuprous oxide NC803 | 43.4 | 43.4 | 43.4 | 43.4 | 49.4 | 49.4 | 45.9 |
| | Anti-settling agent Dis 4200-20X | 1 | 1 | 1 | 1 | 1 | 1 | 1 |
| | Organic red pigment (NOVAPERM RED FSRK) | 0.3 | 0.3 | 0.3 | 0.3 | 0.3 | 0.3 | 0.3 |
| | Anti-running agent Dis 630-20XC | 1.8 | 1.8 | 1.8 | 1.8 | 1.8 | 1.8 | 1.8 |
| | Subtotal | 90 | 90 | 90 | 90 | 90 | 90 | 90 |
| Total | | 100 | | 100 | 100 | 100 | 100 | 100 |

<Evaluation of physical properties of antifouling coating compositions>

The physical properties of the antifouling coating compositions of Examples 1 to 19 and Comparative Examples 1 to 7 and the coating films formed using them were evaluated in the following manner. The results are shown in Tables 8 to 11. (1) Measurement of volatile organic compound (VOC) weight The values for the coating material specific gravity and weight NV were used for the following calculation.

$$VOC \ (g/L) = coating \ material \ specific \ gravity \times 1000 \times (100 - weight \ NV)/100$$

(2) Specific gravity

Immediately after mixing the first component and second component, the weight of the antifouling coating composition filling a specific gravity cup with an internal volume of 100 ml was measured at 25°C to determine the specific gravity (coating material specific gravity) (g/cm$^3$).

(3) Heating residue (weight NV)

Immediately after mixing the first component and second component, 1 g of antifouling coating composition was weighed out into a flat-bottom dish, a wire of known mass was used for even spreading and the solution was dried at 125°C for 1 hour, after which the weights of the residue and wire were measured and the heating residue (wt%) was calculated.

(4) Measurement of antifouling coating compositions viscosity

The first component and second component were weighed out to a total amount of 1000 g, and the coating material viscosity immediately after mixing and adjustment to 23°C was measured using a Rion viscometer (VISCOTESTER VT-04F by Rion Co., Ltd., for high viscosity, No.1 rotor).

(5) Airless spray manageability

The first component and second component were measured out to 5000 g, and the coating manageability (atomizing property, coating film outer appearance) with airless spraying was confirmed. In Tables 8 to 11, "A" represents satisfactory coating manageability, and "B" represents poor coating manageability.

(6) Coating film drying property test (wood block pressing test)

A 150 × 70 × 3.2 mm sand blast-treated steel sheet was coated with an epoxy-based anticorrosive coating material (BANNOH 500, product of Chugoku Marine Paints, Ltd.) to a dry film thickness of 150 $\mu$m and allowed to dry at room temperature (approximately 20°C) for 1 day to form a coating film, and the surface of this coating film was further coated with an epoxy-based binder coating material (BANNOH 500N, product of Chugoku Marine Paints, Ltd.) to a dry film thickness of 100 $\mu$m and allowed to dry at room temperature (approximately 20°C) for 1 day to form a coating film. A procedure of coating the surface of this coating film with the antifouling coating composition to a dry film thickness of 100 $\mu$m, and allowing it to dry at room temperature (approximately 20°C) for 1 day to form a coating film, was repeated twice, to produce a test sheet having an antifouling coating film with a dry film thickness of 200 $\mu$m.
The test sheet was further dried at a room temperature of 23°C for 1, 3, 5 and 7 days, a 30 × 30 × 10 mm wood chip was placed on the coating film (at the center), a pressure of 40 kgf/cm$^2$ (3.9 MPa) was applied onto the wood chip in the longitudinal direction for 20 minutes, and the condition of the coating film surface was observed (deformation of the coating film was measured). The evaluation levels are shown in Fig. 1. In Fig. 1, 10 denotes the wood chip and 20 denotes the coating film. The evaluation level of 5 indicates no deformation of the coating film 20, and is the most satisfactory condition. The evaluation level of 4 indicates slight deformation of the coating film 20 but no exposure of the wood chip 10, and is a satisfactory condition. The evaluation levels 3, 2 and 1 indicate conditions in which the wood chip 10 was exposed due to deformation of the coating film 20, with degree of damage (deformation) increasing in the order: 3, 2, 1.

(7) Antifouling coating film polishing degree test

An applicator was used for coating of 50 × 50 × 1.5 mm hard vinyl chloride sheets with each of the antifouling coating compositions prepared in the examples to a dry film thickness of 150 $\mu$m, and the coatings were allowed to dry indoors for 7 days at room temperature (approximately 20°C), to prepare test sheets.
Each test sheet was attached to the side of a rotating drum set in a thermostatic bath containing 25°C seawater, which was rotated at a circumferential speed of 15 knots, and the antifouling coating film polishing degree (film thickness reduction) was measured each month,

(8) Antifouling coating film stationary antifouling property test

A 100 × 300 × 3.2 mm sand blast-treated steel sheet was coated each day with an epoxy-based coating material (BANNOH 500, product of Chugoku Marine Paints, Ltd.) to a dry film thickness of 150 $\mu$m and with an epoxy-based binder coating material (BANNOH 500N, product of Chugoku Marine Paints, Ltd.) to a dry film thickness of 100 $\mu$m, in that order, and then the surface of the coating film formed from the epoxy-based binder coatings was further coated with each of the antifouling coating compositions prepared in the examples to a dry film thickness of 150 $\mu$m, at a coating interval of 1 day, to prepare test sheets. Each test sheet was dried at 23°C for 7 days and then stationarily submerged in Nagasaki Bay, Nagasaki Prefecture, and the area of adhering organisms was visually examined each month and evaluated on the following scale.

0: No adhesion of aquatic organisms
0.5: More than 0% and no greater than 10% adhesion area of aquatic organisms
1: More than 10% and no greater than 20% adhesion area of aquatic organisms
2: More than 20% and no greater than 30% adhesion area of aquatic organisms
3: More than 30% and no greater than 40% adhesion area of aquatic organisms
4: More than 40% and no greater than 50% adhesion area of aquatic organisms
5: More than 50% adhesion area of aquatic organisms

[Table 8]

| | | Example | | | | | | |
|---|---|---|---|---|---|---|---|---|
| | | 1 | 2 | 3 | 4 | 5 | 6 | 7 |
| VOC (g/L) | | 339 | 339 | 339 | 339 | 339 | 339 | 339 |
| Specific gravity | | 1.97 | 1.97 | 1.97 | 1.97 | 1.97 | 1.97 | 1.97 |
| Realing residue (wt%) | | 82.8 | 82.8 | 82.8 | 82.8 | 82.8 | 82.8 | 82.8 |
| Coating mixture viscosity (dPa·s) | | 19 | 18 | 20 | 19 | 21 | 21 | 21 |
| Airless spray workability | Atomizing property | A | A | A | A | A | A | A |
| | Outer appearance | A | A | A | A | A | A | A |
| Coated film drying/pressurization test | After 1 day drying | 2 | 2 | 2 | 2 | 2 | 2 | 2 |
| | After 3 days drying | 4 | 4 | 3 | 4 | 5 | 4 | 4 |
| | After 7 days drying | 5 | 5 | 5 | 5 | 5 | 5 | 5 |
| Coated film polishing degree (25°C/ 15knot) | After 1 month | 6.9 | 7.6 | 12.1 | 8.9 | 12.1 | 13.3 | 6.8 |
| | After 2 months | 11.1 | 13.2 | 18.9 | 16.8 | 18.9 | 17.6 | 11.3 |
| | After 3 months | 14.8 | 21.2 | 26.7 | 23.6 | 26.7 | 23.4 | 18.8 |
| | After 4 months | 20.1 | 27.8 | 34.3 | 28.9 | 34.3 | 33.2 | 26.5 |
| | After 5 months | 27.5 | 33.4 | 39.7 | 35.5 | 39.7 | 42.3 | 34.5 |
| | After 6 months | 33.2 | 39.7 | 44.3 | 41.2 | 44.3 | 48.7 | 41.3 |
| Stationary antifooling property | After 1 month | 0 | 0 | 0 | 0 | 0 | 0 | 0 |
| | After 2 months | 0 | 0 | 0 | 0 | 0 | 0 | 0 |
| | After 3 months | 0 | 0.5 | 0 | 0.5 | 0 | 0 | 0 |
| | After 4 months | 0.5 | 0.5 | 0.5 | 0.5 | 0.5 | 0.5 | 0.5 |
| | After 5 months | 1 | 1 | 1 | 1 | 1 | 1 | 1 |
| | After 6 months | 1 | 1 | 1 | 1 | 1 | 1 | 1 |

[Table 9]

| | | Example | | | | | | |
|---|---|---|---|---|---|---|---|---|
| | | 8 | 9 | 10 | 11 | 12 | 13 | 14 |
| VOC (g/L) | | 339 | 339 | 339 | 279 | 273 | 335 | 339 |
| Specific gravity | | 1.97 | 1.97 | 1.97 | 2.144 | 2.1 | 1.98 | 1.97 |
| Heating residue (wt%) | | 82.8 | 82.8 | 82.8 | 8.7 | 8.7 | 83.1 | 82.8 |
| Coating mixture viscosity (dPa·s) | | 20 | 20 | 17 | 24 | 25 | 19 | 20 |
| Airless spray workability | Atomizing property | A | A | A | A | A | A | A |
| | Outer appearance | A | A | A | A | A | A | A |
| Coated film drying/ pressurization test | After 1 day drying | 2 | 2 | 2 | 2 | 2 | 2 | 2 |
| | After 3 days drying | 4 | 4 | 4 | 4 | 4 | 4 | 4 |
| | After 7 days drying | 5 | 5 | 5 | 5 | 5 | 5 | 5 |

(continued)

| | | Example | | | | | | |
|---|---|---|---|---|---|---|---|---|
| | | 8 | 9 | 10 | 11 | 12 | 13 | 14 |
| Coated film polishing degree (25°C/ 15knot) | After 1 month | 4.3 | 6.3 | 10.8 | 4.7 | 8.7 | 4.2 | 6.7 |
| | After 2 months | 8.9 | 11.4 | 17.8 | 11.1 | 11.3 | 8.9 | 11.1 |
| | After 3 months | 13.3 | 18.9 | 26.7 | 14.8 | 16.7 | 12.3 | 16.7 |
| | After 4 months | 18.9 | 21.5 | 35.7 | 20.1 | 22.3 | 19.1 | 24.4 |
| | After 5 months | 23.2 | 29.7 | 41.3 | 27.5 | 26.4 | 24.5 | 32.2 |
| | After 6 months | 27.5 | 33.2 | 50.6 | 33.2 | 32.3 | 33.4 | 27.8 |
| Stationary antifouling property | After 1 month | 0 | 0 | 0 | 0 | 0 | 0 | 0 |
| | After 2 months | 0 | 0 | 0 | 0 | 0 | 0 | 0 |
| | After 3 months | 0 | 0 | 0.5 | 0.5 | 0 | 0 | 0.5 |
| | After 4 months | 0.5 | 0.5 | 0.5 | 0.5 | 0.5 | 0.5 | 0.5 |
| | After 5 months | 1 | 0.5 | 1 | 1 | 0.5 | 1 | 1 |
| | After 6 months | 1 | 0.5 | 1 | 1 | 0.5 | 1 | 1 |

[Table 10]

| | | Example | | | | |
|---|---|---|---|---|---|---|
| | | 15 | 16 | 17 | 18 | 19 |
| VOC (g/L) | | 335 | 339 | 339 | 339 | 34.6 |
| Specific gravity | | 1.95 | 1.97 | 1.97 | 1.97 | 2.02 |
| Heating residue (wt%) | | 82.8 | 82.8 | 82.8 | 82.8 | 82.8 |
| Coating mixture viscosity (dPa·s) | | 18 | 20 | 19 | 19 | 19 |
| Airless spray workability | Atomizing property | A | A | A | A | A |
| | Outer appearance | A | A | A | A | A |
| Coated film drying/ pressurization test | After 1 day drying | 2 | 2 | 2 | 2 | 2 |
| | After 3 days dying | 4 | 4 | 4 | 4 | 4 |
| | After 7 days drying | 5 | 5 | 5 | 5 | 5 |
| Coating film polishing degree (25°C/15knot) | After 1 month | 8.1 | 6.7 | 9.8 | 7.8 | 7.8 |
| | After 2 months | 13.6 | 11.4 | 14.3 | 16.4 | 11.1 |
| | After 3 months | 18.7 | 17.6 | 20.2 | 21.3 | 15.6 |
| | After 4 months | 23.3 | 18.9 | 25.5 | 26.6 | 21.2. |
| | After 5 months | 28.7 | 24.5 | 31.3 | 31.7 | 26.5 |
| | After 6 mouths | 33.9 | 31.2 | 37.6 | 36.6 | 31.3 |

(continued)

| | | Example | | | | |
|---|---|---|---|---|---|---|
| | | 15 | 16 | 17 | 18 | 19 |
| Stationary antifouling property | After 1 month | 0 | 0 | 0 | 0 | 0 |
| | After 2 months | 0 | 0 | 0 | 0 | 0.5 |
| | After 3 months | 0 | 0.5 | 0 | 0 | 1 |
| | After 4 months | 0.5 | 0.5 | 0.5 | 0.5 | 1 |
| | After 5 mouths | 0.5 | 1 | 1 | 1 | 1.5 |
| | After 6 months | 1 | 1 | 1 | 1 | 2 |

[Table 11]

| | | Comp.Ex. | | | | | | |
|---|---|---|---|---|---|---|---|---|
| | | 1 | 2 | 3 | 4 | 5 | 6 | 7 |
| VOC (g/L) | | 339 | 339 | 339 | 339 | 332 | 332 | 139 |
| Specific gravity | | 1.97 | 1.97 | 1.97 | 1.97 | 1.93 | 1.93 | 1.97 |
| Heating residue (wt%) | | 82.8 | 82.8 | 82.8 | 82.3 | 82.8 | 82.8 | 82.8 |
| Coating mixture viscosity (dPa·s) | | 31 | 33 | 23 | 63 | 19 | 56 | 30 |
| Airless spray workability | Atomizing property | B | B | A | B | A | B | B |
| | Outer appearance | B | B | A | B | A | B | B |
| Coated film drying/ pressurization test | After 1 day drying | 1 | 1 | 1 | 1 | 1 | 1 | 1 |
| | After 3 days drying | 2 | 2 | 2 | 2 | 1 | 1 | 2 |
| | After 7 days drying | 2 | 2 | 2 | 2 | 2 | 2 | 2 |
| Coated film polishing degree (25°C/ 15knot)) | After 1 month | 20.2 | 23.2 | 25.4 | 30.5 | 34.1 | 25.4 | 19.8 |
| | After 2 months | 23.3 | 24.1 | 27.1 | 31.2 | 36.5 | 28.8 | 25.4 |
| | After 3 months | 24.3 | 25.1 | 28.4 | 32.2 | 37.1 | 30.3 | 28.9 |
| | After 4 months | 26.4 | 25.9 | 29.1 | 33.3 | 37.7 | 30.7 | 30.7 |
| | After 5 months | 27.1 | 26.3 | 30.1 | 34.1 | 38.3 | 31.7 | 31.7 |
| | After 6 months | 27.3 | 27.3 | 31.3 | 35.1 | 39.5 | 33.3 | 32.3 |
| Stationary antifonling property | After 1 month | 0.5 | 0.5 | 0.5 | 0.5 | 0.5 | 0.5 | 0.5 |
| | After 2 months | 0.5 | 0.5 | 1 | 3 | 3 | 3 | 3 |
| | After 3 months | 1 | 1 | 1 | 4 | 4 | 4 | 4 |
| | After 4 months | 2 | 2 | 2 | 5 | 5 | 5 | 4 |
| | After 5 months | 3 | 3 | 3 | 5 | 5 | 5 | 4 |
| | After 6 months | 4 | 4 | 4 | 5 | 5 | 5 | 5 |

The details for some of the starting materials used in the examples and comparative examples are shown in Table 12.

[Table 12]

| Product name | Manufacturer | Type | Solid content (%) |
|---|---|---|---|
| Talc FC.1 | Fukuoka Talc | Extender pigment | 100 |
| Zinc oxide | Kyushuu Hekusuk | Extender pigment | 100 |
| NOVAPERM RED F5RK. | Clariant North America | Organic red pigment | 100 |
| Copper omadine | Arch Chemicals | Organic antifouling agent | 100 |
| Cuprous oxide NC-803 | NC Tech | Cuprous oxide | 100 |
| Potassium feldspar | Kinsei Matic | Potassium feldspar | 100 |
| CERECLOR S-52 | Chlor Chemical | Chlorinated paraffin | 100 |
| QUINTONE 1500 | Zeon Corp. | Alicyclic hydrocarbon | 100 |
| LAROPALA81 | BASF | Ketone resin | 100 |
| 4,5-Dichloro-2-n-octyl-4-isothiazolin-3-one | Rohm & Haas | Organic antifouling agent | 30 |
| DUOMEEN TDO | Lion | Pigment dispersant | 100 |
| BYK-101 | BYK Chemical | Pigment dispersant | 100 |
| 2-Methylthio-4-t-butylamino-6-cyclpropylamino-s-triazine | Ciba | Organic antifouling agent | 100 |
| Dis 630-20XC | Kusumoto Chemicals | Anti-running agent | 20 |
| Dis 4200-20X | Kusumoto Chemicals | Anti-setlling agent | 20 |

Explanation of Symbols

10: Wood chip, 20: coating film.

**Claims**

1. A two-pack hydrolyzable antifouling coating composition, comprising:

a first component that contains a polyester resin having a solid portion acid value of 50-200, a solid portion hydroxyl value of no greater than 100 and a 25°C viscosity of no greater than 500 mPa·s; and
a second component which is a paste comprising zinc oxide and cuprous oxide,
wherein the volatile organic compound content is no greater than 400 g/L based on the total of the first component and the second component.

2. The two-pack hydrolyzable antifouling coating composition according to claim 1, wherein the weight-average molecular weight of the polyester resin is no greater than 5,000 as measured by gel permeation chromatography.

3. The two-pack hydrolyzable Antifouling coating composition according to claim 1 or 2, wherein the zinc oxide content in the second component is 10-300 parts by weight with respect to 100 parts by weight of the polyester resin.

4. The two-pack hydrolyzable antifouling coating composition according to any one of claims 1 to 3, which further comprises a rosin and/or a rosin derivative.

5. The two-pack hydrolyzable antifouling coating composition according to any one of claims 1 to 4, which further comprise an antifouling agent (other than cuprous oxide).

6. The two-pack hydrolyzable Antifouling coating composition according to any one of claims 1 to 5, which further comprises a plasticizer.

7. The two-pack hydrolyzable antifouling coating composition according to any one of claims 1 to 6, which further comprises an extender pigment (other than zinc oxide).

8. The two-pack hydrolyzable antifouling coating composition according to any one of claims 1 to 7, which further comprises a pigment dispersant.

9. The two-pack hydrolyzable antifouling coating composition according to any one of claims 1 to 8, which further comprises a color pigment.

10. An antifouling coating film obtained by curing the two-pack hydrolyzable antifouling coating composition according to any one of claims 1 to 9.

11. A method of preventing fouling of a base material, comprising the steps of:

coating or impregnating the two-pack hydrolyzable Antifouling coating composition according to any one of claims 1 to 9 onto or into a base material; and
curing the two-pack hydrolyzable antifouling coating composition to form an antifouling coating film.

# *Fig.1*

Points

Good
(low damage)

5    ~20

4    ~20

3    ~10  ~20

2    ~10  ~20

1    ~10  ~20

Poor
(high damage)

<table>
<tr><td colspan="2" align="center">**INTERNATIONAL SEARCH REPORT**</td><td>International application No.<br>PCT/JP2009/071146</td></tr>
</table>

A. CLASSIFICATION OF SUBJECT MATTER
*C09D167/00*(2006.01)i, *C09D5/16*(2006.01)i, *C09D7/12*(2006.01)i, *C09D193/04* (2006.01)i

According to International Patent Classification (IPC) or to both national classification and IPC

B. FIELDS SEARCHED

Minimum documentation searched (classification system followed by classification symbols)
C09D167/00, C09D5/16, C09D7/12, C09D193/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 11-140376 A  (Nippon Paint Co., Ltd.),<br>25 May 1999 (25.05.1999),<br>claim 1; paragraphs [0042], [0045], [0051], [0054]; coating material example 19<br>& US 4774080 A          & EP 204456 A1 | 10<br>1-9,11 |
| A | JP 2002-241676 A  (Nippon Paint Co., Ltd.),<br>28 August 2002 (28.08.2002),<br>entire text<br>& US 2002/0011177 A1     & EP 1138725 A1 | 1-11 |
| A | JP 54-119534 A  (Kansai Paint Co., Ltd.),<br>17 September 1979 (17.09.1979),<br>entire text<br>& US 4270953 A          & GB 2018260 A | 1-11 |

[X] Further documents are listed in the continuation of Box C.    [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 January, 2010 (06.01.10) | Date of mailing of the international search report<br>19 January, 2010 (19.01.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/071146

C (Continuation).   DOCUMENTS CONSIDERED TO BE RELEVANT

| Category* | Citation of document, with indication, where appropriate, of the relevant passages | Relevant to claim No. |
|---|---|---|
| A | JP 09-132736 A  (Dai Nippon Toryo Co., Ltd.),<br>20 May 1997 (20.05.1997),<br>entire text<br>(Family: none) | 1-11 |
| A | JP 2001-152086 A  (Kansai Paint Co., Ltd.),<br>05 June 2001 (05.06.2001),<br>entire text<br>(Family: none) | 1-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7166106 A
- JP 7082513 A
- JP 8176501 A
- JP 7053899 A
- JP 9132736 A
- JP 11255869 A
- JP 2000248206 A
- JP 57128742 A
- JP 2196869 A
- JP 10298455 A